# EUROPEAN PATENT SPECIFICATION

(11) **EP 1 901 102 B1**
(45) Date of publication and mention of the grant of the patent: **08.07.2009**
(21) Application number: 07017973.4
(22) Date of filing: 13.09.2007
(51) Int. Cl.: G02B 7/02, G11B 7/08

(54) **Tilt adjusting mechanism for objective lens**
Neigungseinstellmechanismus für Objektivlinsen
Mécanisme de réglage d'inclinaison pour lentille d'objectif

(30) Priority: 13.09.2006 JP 2006247559
(43) Date of publication of application: 19.03.2008
(73) Proprietor: Funai Electric Co., Ltd., Daito-shi Osaka 574-0013 (JP)
(72) Inventor: Sasaoka, Hiromasa, Daito-shi Osaka 574-0013 (JP)
(74) Representative: Beetz & Partner

(56) References cited:
- JP-A- 5 101 429
- JP-A- 2005 070 417
- US-A- 3 713 725
- US-A- 6 111 827

## Description

### BACKGROUND OF THE INVENTION

### 1. Field of the Invention

The present invention relates to a tilt adjusting mechanism for an objective lens. For example, it relates to the tilt adjusting mechanism that performs relative tilt adjustment of objective lenses in an optical pickup device having a plurality of objective lenses and an actuator for driving the objective lenses.

### 2. Description of Related Art

In an optical pickup device having a plurality of objective lenses, if coma aberration that may occur due to a relative tilt of the objective lenses has different occurrence direction and occurrence quantity, optical performance of the optical pickup device will be lowered. In order to solve this problem, there is proposed a technique for performing relative tilt adjustment of a plurality of objective lenses in JP-A-2006-19001, JP-A-H11-120602, JP-A-H10-11765 and the like. A tilt adjusting mechanism described in JP-A-2006-19001 or JP-A-H11-120602 has a structure in which an attachment surface for the objective lens is directly provided with a tapered surface, a curved surface or the like so that the tilt adjustment of the objective lens can be performed. In addition, the tilt adjusting mechanism described in JP-A-H10-11765 has a structure in which a tilting holder to which the objective lens is fixed is tilted for adjustment with respect to the lens holder.

However, the tilt adjusting mechanisms described in the above-mentioned three patent documents do not consider a tilt of aperture stop with respect to the objective lens whose tilt is adjusted. The aperture member that constitutes the aperture stop is usually provided to the lens holder. Therefore, if the tilt adjustment causes inclination of the objective lens with respect to the aperture, symmetry of the optical system with respect to an optical path may be lost. This will be a factor causing deterioration of optical performance as a result.

JP-A1-05101429 discloses an optical head that has a contact surface of a bobbin with a lens holder that is formed to an approximately spherical surface shape. The contact surface of the lens holder with the bobbin is formed to the spherical shape. The lens holder is sucked by an adjusting jig and is rotated so that the outer peripheral surface of the spherical surface shape of the lens holder is slid with respect to the inner peripheral surface of the circular conical shape of the bobbin and the skew angle of the objective lens is adjusted.

US-A1-6111827 discloses an optical pickup that is capable of performing an adjustment of the objective lens skew. The optical pickup comprises a light source to emit a light beam; a frame having provided therein photodetectors; an objective lens; an objective lens driving mechanism to support the objective lens movably in a direction parallel to the optical axis of the objective lens; and a support plate installed on the frame to fix the objective lens driving mechanism; the objective lens driving mechanism support plate being mounted on the frame with a spherical adjusting mechanism provided between them, the spherical adjusting mechanism being located at the lateral sides of the objective lens supported by the objecting lens driving mechanism, the support plate for the objective lens driving mechanism being mounted on the frame by means of the spherical adjusting mechanism, the support plate being fixed after adjusted in position and angle along the spherical adjusting mechanism.

US-A1-3713725 discloses a camera objective lens mount that comprises a first circular member rotatably mounted on the front of the camera focussing barrel parallel to the camera focal plane and has a first circular eccentric opening with a spherical peripheral face. The camera objective lens mount further comprises a second circular member with a spherical peripheral surface that mates and rotatably and tiltably engages the first opening and the camera objective lens is eccentrically mounted in and projects through the second member so as to be universally angularly adjustable and universally movable in directions parallel to the camera focal plane.

JP-A-2005070417 discloses a lens adjusting device capable of adjusting a tilt of the optical axis. A slidable outer spherical surface which makes at least a part of the outer surface of a sphere is formed on the outer peripheral part of a lens frame in which a lens is fixed, and a slidable inner spherical surface having the same center as that of the outer spherical surface and coming in contact with the outer spherical surface is formed in the inner peripheral part of a holding frame for holding the lens frame, and the lens adjuster is provided with a tilting control mechanism for sliding the slidable outer spherical surface and the slidable inner spherical surface and tilting the lens frame to the center axis of the holding frame.

### SUMMARY OF THE INVENTION

An object of the present invention is to provide a tilt adjusting mechanism according to claim 1 that enables reduction of relative tilt quantity of a plurality of objective lenses and correct light beam control, and to provide an actuator for driving the objective lens equipped with the tilt adjusting mechanism, as well as an optical pickup device.

In an aspect of the present invention according to claim 1, a tilt adjusting mechanism adjusts a tilt of at least one of a plurality of objective lenses so that they have the same inclination state. The tilt adjusting mechanism includes an aperture member to which an objective lens to be a target of the tilt adjustment is fixed, and a lens holder to which the aperture member is fixed from a slidable state for the tilt adjustment. As a surface for sliding movement of the aperture member with respect to the lens holder, there is provided a sliding surface that is a part of a spherical surface having a center that is a principal point of the objective lens or adjacent point thereof, and the aperture member forms an aperture stop for the objective lens to restrict the outgoing-side numerical aperture of the objective lens.

### BRIEF DESCRIPTION OF THE DRAWINGS

Fig. 1 shows a partial cross section showing an embodiment of an actuator having a tilt adjusting mechanism.
Fig. 2 is a cross sectional view showing an inner structure of an aperture member that constitutes a tilt adjusting mechanism shown in Fig. 1.
Fig. 3 is a perspective view showing an appearance of the actuator shown in Fig. 1.
Fig. 4 is a plan view showing a general structure of the actuator shown in Fig. 1.
Fig. 5 is a cross sectional view along the line V-V' shown in Fig. 4.
Fig. 6 is a schematic diagram showing a first example of an optical configuration of an optical pickup device.
Fig. 7 is a schematic diagram showing a second example of the optical configuration of the optical pickup device.
Figs. 8A-8H are cross sectional views showing examples of a sliding structure of the tilt adjusting mechanism.

### DETAILED DESCRIPTION OF THE PREFERRED EMBODIMENTS

Hereinafter, embodiments and the like of a tilt adjusting mechanism for an objective lens, an actuator, and an optical pickup device according to the present invention according to claim 1 will be described with reference to the attached drawings. However, an application of the tilt adjusting mechanism according to the present invention according to claim 1 is not limited to the optical pickup device. It can be applied to other optical equipment having a plurality of objective lenses and a lens holder thereof and an aperture member. Note that the same parts or corresponding parts among individual structures are denoted by the same reference signs so that overlapping descriptions can be omitted as necessity.

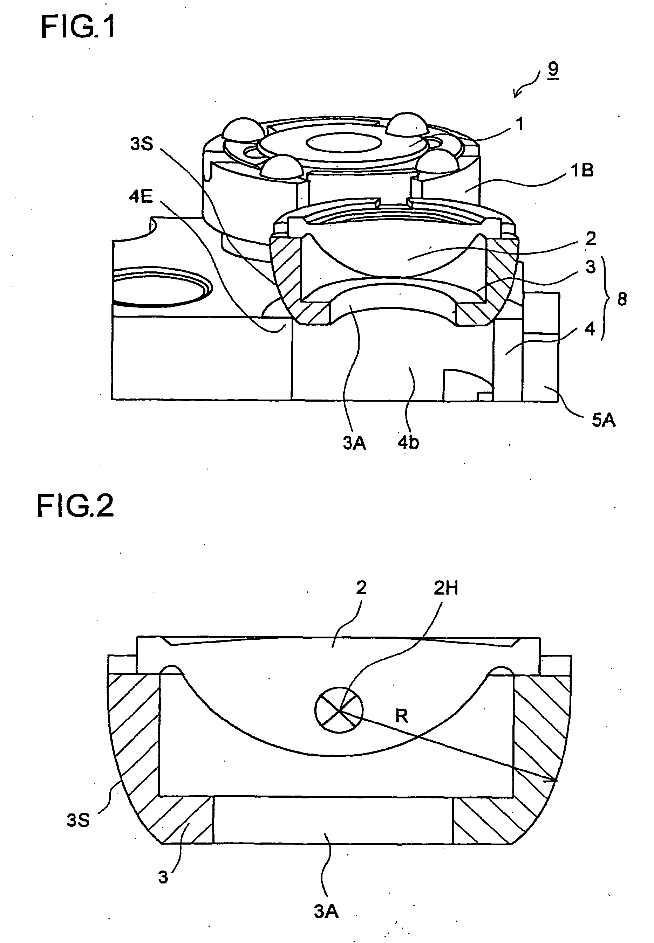

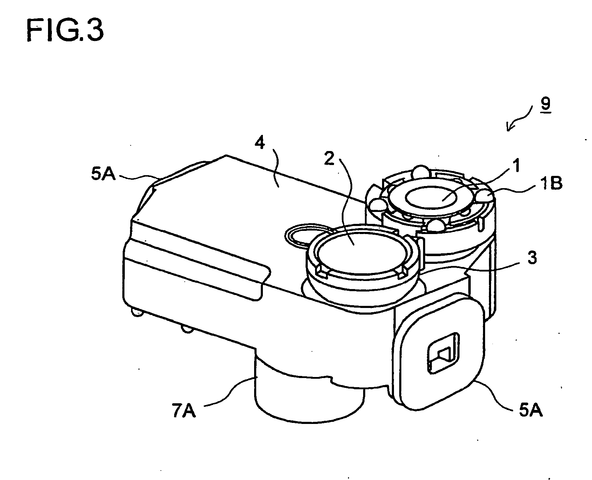

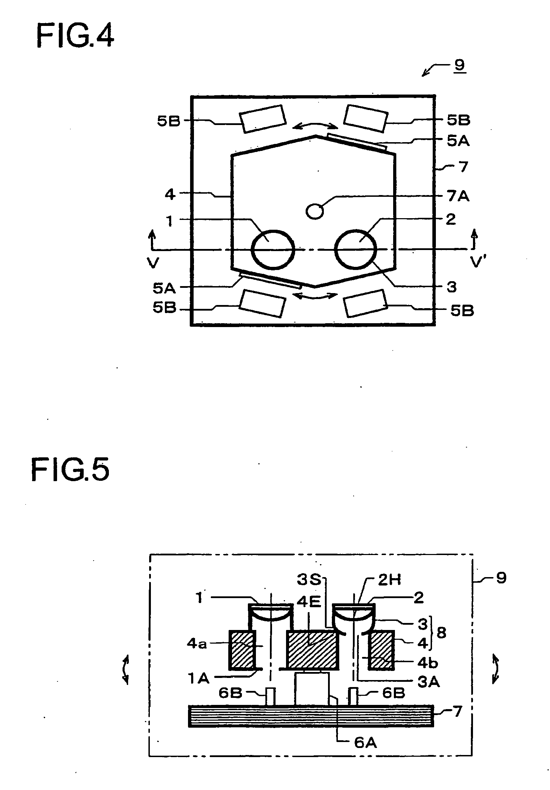

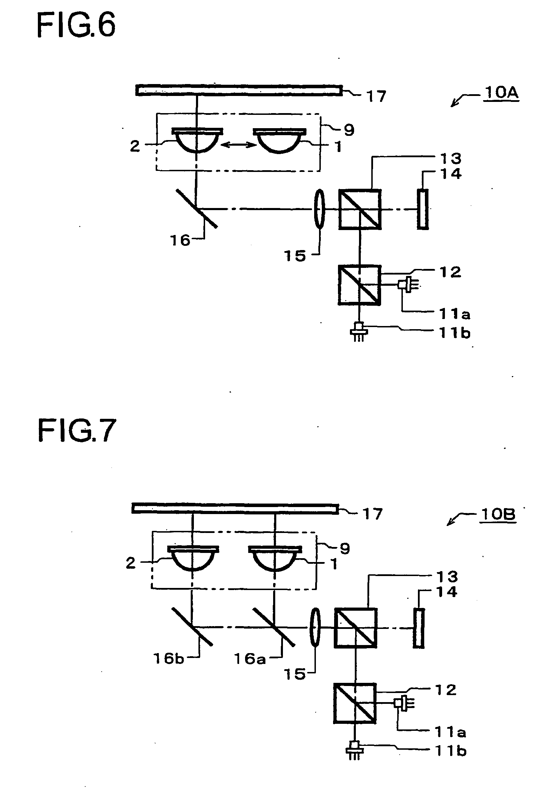

Fig. 1 shows a partial cross section showing an embodiment of an actuator 9 having a tilt adjusting mechanism. In addition, Fig. 2 shows an inner structure of the aperture member 3, and Fig. 3 shows an appearance of the actuator 9. Further, Figs. 4 and 5 show the appearance and an inner structure of the actuator 9 in a simplified manner. Here, Fig. 4 is a plan view of the actuator 9, and Fig. 5 is a cross sectional view cut along the line V-V' shown in Fig. 4. First and second examples of an optical configuration of an optical pickup device equipped with the actuator 9 are shown in Figs. 6 and 7, respectively. Note that a polarizing and separating structure with a quarter wavelength plate and the like for a round trip optical path is omitted in the drawings.

In an optical pickup device 10A shown in Fig. 6, a blue laser beam (having a wavelength of 405 nm, for example) emitted from a semiconductor laser 11a is reflected by polarizing beam splitters 12 and 13 in turn, and then it is made parallel rays by a collimator lens 15. On the other hand, a red laser beam (having a wavelength of 650 nm, for example) emitted from a semiconductor laser 11b passes through the polarizing beam splitter 12 and is reflected by the polarizing beam splitter 13, and then it is made parallel rays by the collimator lens 15. The laser beam that goes out from the collimator lens 15 is reflected by an upstand mirror 16 and is condensed by a first objective lens 1 or a second objective lens 2 to reach a recording surface of an optical disc 17.

Switching between the first objective lens 1 and the second objective lens 2 is performed by rotating a lens holder 4 around a shaft 7A as shown in Figs. 3 and 4. Coils 5A are attached to two positions of the lens holder 4, and the lens holder 4 is driven to rotate by interaction between the coils 5A and four magnets 5B disposed around the lens holder 4. This rotation action of the lens holder 4 enables switching action of inserting one of the first and the second objective lenses 1 and 2 in the optical path and pulling out the other from the optical path.

The laser beam reflected by the recording surface of the optical disc 17 (see Fig. 6) is reflected by the upstand mirror 16 after passing through the first objective lens 1 or the second objective lens 2. Then, it passes through the collimator lens 15 and passes through the polarizing beam splitter 13 so as to reach a photodetector 14. The photodetector 14 delivers an electric signal corresponding to light information of the received laser beam. Note that the oscillation wavelengths of the semiconductor lasers 11a and 11b are not limited to the values described above. In addition, the number of the semiconductor lasers to be used and the number of the objective lenses are set in accordance with types of optical discs to be supported.

In an optical pickup device 10B shown in Fig. 7, a blue laser beam (having a wavelength of 405 nm, for example) emitted from a semiconductor laser 11a is reflected by polarizing beam splitters 12 and 13 in turn, and then it is made parallel rays by a collimator lens 15. On the other hand, a red laser beam (having a wavelength of 650 nm, for example) emitted from a semiconductor laser 11b passes through the polarizing beam splitter 12 and is reflected by the polarizing beam splitter 13, and then it is made parallel rays by the collimator lens 15. The blue laser beam that goes out from the collimator lens 15 is reflected by a dichroic mirror 16a and then is condensed by the first objective lens 1 to reach a recording surface of the optical disc 17. On the other hand, the red laser beam that goes out from the collimator lens 15 passes through the dichroic mirror 16a and is reflected by an upstand mirror 16b, and then it is condensed by the second objective lens 2 to reach the recording surface of the optical disc 17.

The optical pickup device 10B shown in Fig. 7 has a structure in which the dichroic mirror 16a branches the optical path, so it does not perform the switching between the first and the second objective lenses 1 and 2 by the rotation action of the lens holder 4. In other words, there is no structure for rotating the lens holder 4 (as shown in Fig. 4), and other structure of the actuator 9 equipped with the optical pickup device 10B is the same as that equipped with the optical pickup device 10A. Therefore, a tilt adjusting mechanism 8 that will be described later (see Fig. 5) is used in the actuator 9 equipped with the optical pickup device 10B in the same manner as the optical pickup device 10A.

The blue laser beam reflected by the recording surface of the optical disc 17 (see Fig. 7) is reflected by the dichroic mirror 16a after passing through the first objective lens 1. The red laser beam reflected by the recording surface of the optical disc 17 passes through the second objective lens 2, then is reflected by the upstand mirror 16 and passes through the dichroic mirror 16a. The laser beam that goes out from the dichroic mirror 16a passes through the collimator lens 15 and the polarizing beam splitter 13 in turn, and then it reaches the photodetector 14. The photodetector 14 produces an electric signal corresponding to light information of the received laser beam. Note that oscillation wavelengths of the semiconductor lasers 11a and 11b are not limited to the values described above. In addition, the number of the semiconductor lasers to be used and the number of the objective lenses are set in accordance with types of optical discs to be supported.

If there is a relative tilt between the first and the second objective lenses 1 and 2 of the optical pickup devices 10A and 10B described above, differences of occurrence direction and occurrence quantity of coma aberration that may occur due to the relative tilt may cause deterioration of optical performance of the optical pickup devices 10A and 10B. In order to solve this problem, the optical pickup devices 10A and 10B are equipped with the tilt adjusting mechanism 8 that performs relative tilt adjustment between the first and the second objective lenses 1 and 2. The tilt adjusting mechanism 8 has a function of adjusting a tilt of the second objective lens 2 so that both the first and the second objective lenses 1 and 2 become the same tilt state, and it is mounted on the actuator 9 for driving the objective lens as shown in Figs. 1 and 5.

The actuator 9 is a device that moves the first and the second objective - lenses 1 and 2 for focusing or tracking, and it is made up of an aperture member 3 (see Figs. 1-5), a lens holder 4 (see Figs. 1 and 3-5), a base 7 (see Figs. 4 and 5) and the like. As shown in Fig. 5, a coil 6A and magnets 6B are disposed on the base 7 as a driving source for moving the first and the second objective lenses 1 and 2 in the focusing direction. Furthermore, in order to reduce a damage to the optical disc 17 when the first and the second objective lenses 1 and 2 moves for focusing to approach the optical disc 17 and abuts the same, a cushioning member 1B (see Figs. 1 and 3) is provided to the first objective lens 1 at the side facing the optical disc 17. It is preferable to use a resin softer-than a protection film of the optical disc 17 (e.g., a resin of polyacetal or polyurethane) as a material of the cushioning member 1B.

The lens holder 4 is provided with an optical path hole 4a (see Fig. 5) at which the first objective lens 1 is placed and an optical path hole 4b (see Figs. 1 and 5) at which the second objective lens 2 is placed. Each of the optical path holes 4a and 4b is a cylindrical through hole having circular openings. The first objective lens 1 is fixed to one side of the optical path hole 4a (i.e., the side facing the optical disc 17), while an aperture member 1A is fixed to the other side of the optical path hole 4a. In addition, the aperture member 3 to which the second objective lens 2 is fixed is disposed at the side of the optical path hole 4b that faces the optical disc 17. The aperture members 1A and 3 restrict numerical aperture of the first and the second objective lenses 1 and 2, respectively, at their outgoing sides. Note that adhesive or the like is used for fixing the first objective lens 1 and the aperture member 1A to the lens holder 4 and for fixing the second objective lens 2 to the aperture member 3.

As shown in Figs. 1 and 5, the tilt adjusting mechanism 8 is made up of the aperture member 3 to which the second objective lens 2 is fixed as a target of the tilt adjustment and the lens holder 4 to which the aperture member 3 is fixed from a slidable state for the tilt adjustment. Furthermore, as a surface for sliding movement of the aperture member 3 with respect to the lens holder 4, the aperture member 3 has a sliding surface 3 S that is a part of a spherical surface (a spherical surface having a radius R as shown in Fig. 2) having a center that is a principal point 2H of the second objective lens 2 (or adjacent point thereof). The sliding action for the tilt adjustment is performed at a brim 4E of the optical path hole 4b having a circular opening in the lens holder 4. In other words, the aperture member 3 is rotated for the tilt adjustment of the second objective lens 2 in the state where the sliding surface 3S contacts the brim 4E of the optical path hole 4b of the lens holder 4.

After performing the tilt adjustment of the second objective lens 2, the aperture member 3 is fixed to the lens holder 4 at a few points by using adhesive (e.g., an ultraviolet curing adhesive). Then, the first and the second objective lenses 1 and 2 are integrated with the lens holder 4 in the state where there is no relative tilt between them. Since the first objective lens 1 and the second objective lens 2 have optical axes that are parallel to each other by the tilt adjustment, there is no difference of occurrence direction and occurrence quantity of coma aberration between them. However, the first and the second objective lenses 1 and 2 my have the same inclination with respect to the recording surface of the optical disc 17. Tilt adjustment for this inclination with respect to the recording surface of the optical disc 17 can be performed by adjusting a tilt of the entire actuator 9 as shown in Fig. 5. Even if coma aberration occurs in both the first and the second objective lenses 1 and 2, the both coma aberration can be corrected by the tilt adjustment of the entire actuator 9 because the occurrence direction and the occurrence quantity are equal between them.

The tilt adjusting mechanism 8 described above has the sliding surface 3S that is a part a spherical surface having a center that is the principal point 2H of the second objective lens 2 (or adjacent point thereof) as a surface for the sliding movement of the aperture member 3 with respect to the lens holder 4. Therefore, even if a tilt of the second objective lens 2 that is a target of the adjustment is adjusted, the second objective lens 2 is not inclined relatively to the aperture 3A of the aperture member 3 (see Figs. 1 and 5). As a result, symmetry of the optical system with respect to the optical path of the second objective lens 2 is not lost, so deterioration of optical performance due to the tilt adjustment can be avoided. Therefore, it is able to reduce relative tilt quantity between the first and the second objective lenses 1 and 2, and to perform correct light beam control. Furthermore, since the tilt adjusting mechanism 8 is used in the actuator 9 for driving the objective lens of the optical pickup devices 10A and 10B, it is able to obtain high optical performance for each of the first and the second objective lenses 1 and 2.

Since the tilt adjusting mechanism 8 described above has a structure in which the aperture member 3 has the sliding surface 3S, it is sufficient that only the aperture member 3 of the second objective lens 2 to be adjusted should be finished with high accuracy. Therefore, the load of accuracy on the lens holder 4 can be reduced. Therefore, the optical pickup devices 10A and 10B can be easily improved to have high performance. In other words, since the lens holder 4 is provided with the cylindrical optical path hole 4b having circular openings, and the sliding movement is performed at the brim 4E of the optical path hole 4b, the high performance optical pickup devices 10A and 10B can be realized with a simple structure.

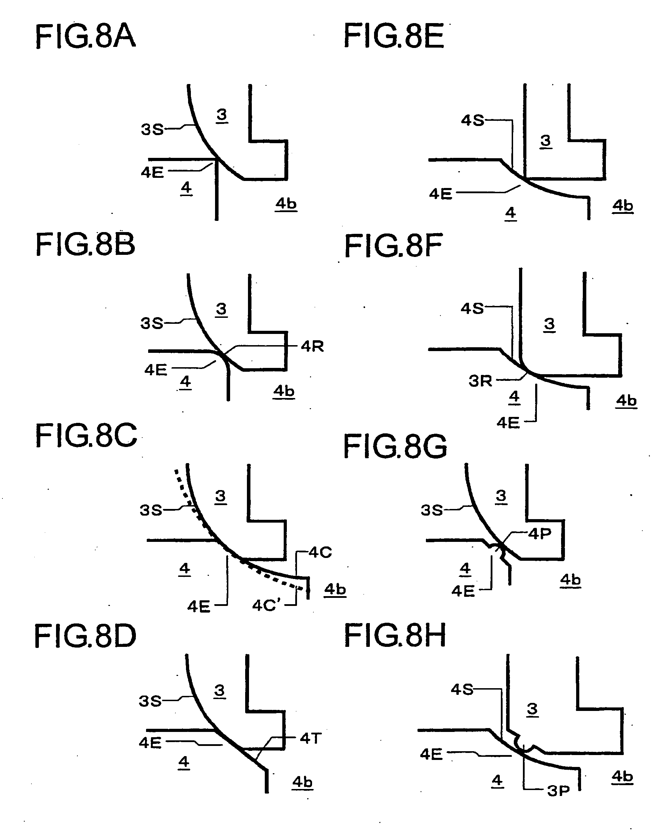

Since the optical path hole 4b has a cylindrical shape in the tilt adjusting mechanism 8 described above, the cross sectional shape of the brim 4E of the optical path hole 4b having circular openings has a right angle as shown in Fig. 8A. Therefore, the sliding movement for the tilt adjustment is performed with circular line contact between the brim 4E and the sliding surface 3 S. The sliding movement with the line contact may cause flaws occurring on the sliding surface 3 S of the aperture member 3, resulting in a difficulty in performing the tilt adjustment smoothly. In order to solve this problem, it is preferable to form the brim 4E of the optical path hole 4b as a convex surface 4R as shown in Fig. 8B. The convex surface 4R of the brim 4E enables the tilt adjustment to be performed smoothly.

As shown in Fig. 8C, it is possible to form the brim 4E of the optical path hole 4b as a concave surface 4C having the same shape as the sliding surface 3S, or it is possible to form the brim 4E of the optical path hole 4b as a concave surface 4C' (shown in the dotted line) having a looser curvature than the sliding surface 3S has. In order to perform the tilt adjustment by more stable sliding movement, it is preferable to form the brim 4E of the optical path hole 4b as the concave surface 4C or 4C' that is close to the curved surface shape of the sliding surface 3S. From a similar viewpoint, it is possible to form the brim 4E of the optical path hole 4b as a tapered surface 4T as shown in Fig. 8D.

On the contrary to the structure shown in Figs. 8A and 8B, it is possible to adopt another structure as shown in Figs. 8E and 8F, in which the brim 4E of the optical path hole 4b is provided with a sliding surface 4S. More specifically, as a surface for sliding movement of the aperture member 3 with respect to the lens holder 4, the lens holder 4 may have the sliding surface 4S that is apart of a spherical surface (a spherical surface having the radius R as shown in Fig. 2) having a center that is the principal point 2H of the second objective lens 2 (or adjacent point thereof). If the brim 4E of the optical path hole 4b has the sliding surface 4S, relative positioning with the aperture member 1A on the first objective lens 1 side can be performed accurately. In addition, if another structure as shown in Fig. 8F, in which the sliding movement is performed by a convex surface 3R of the aperture member 3 is adopted, the tilt adjustment can be performed smoothly in the same manner as the case of Fig. 8B.

It is possible to adopt another structure as shown in Fig. 8G, in which three protrusions 4P contacting with the sliding surface 3 S are provided so that the three protrusions 4P perform the sliding movement. It is also to adopt another structure as shown in Fig. 8H, in which three protrusions 3P contacting with the sliding surface 4S are provided so that the three protrusions 3P perform the sliding movement. The structure, in which the sliding surface 3S or 4S is supported at three points by the protrusions 4P or 3P, enables stable sliding movement.

As understood from the above description, the embodiment described above according to claim 1 includes the structure as below. It includes the structure of the tilt adjusting mechanism that adjusts a tilt of at least one of a plurality of objective lenses so that they have the same inclination state. The tilt adjusting mechanism includes an aperture member to which an objective lens to be a target of the tilt adjustment is fixed and a lens holder to which the aperture member is fixed from a slidable state for the tilt adjustment. As a surface for sliding movement of the aperture member with respect to the lens holder, there is provided a sliding surface that is a part of a spherical surface having a center that is a principal point of the objective lens or adjacent point thereof.

According to this structure, since there is provided a sliding surface that is a part of a spherical surface having a center that is a principal point of the objective lens or adjacent point thereof as a surface for sliding movement of the aperture member with respect to the lens holder, the objective lens is not inclined with respect to the aperture relatively even if a tilt of the objective lens to be a target of the adjustment is adjusted. As a result, symmetry of the optical system with respect to the optical path of the objective lens is not lost, so deterioration of optical performance due to the tilt adjustment can be avoided. Therefore, it is able to reduce relative tilt quantity between the plurality of objective lenses, and to perform correct light beam control. Furthermore, if the tilt adjusting mechanism according to the present invention is used in the actuator for driving the objective lens of the optical pickup device, it is able to obtain high optical performance for each of the plurality of objective lenses.

According to the above-mentioned structure according to claim 1 in which the aperture member has the sliding surface, it is sufficient that only the aperture member of the objective lens to be a target of the adjustment should be finished with high accuracy. Therefore, the optical pickup device can be easily improved to have high performance. For example, the lens holder is provided with an optical path hole (e.g., a cylindrical through hole) having a circular opening, and the sliding movement is performed at a brim of the optical path hole. Thus, the optical pickup device can be improved to have high performance with a simple structure. Adopting another structure in which a brim of the optical path hole is provided with the sliding surface, it is able to perform relative positioning with another aperture member of the other objective lens with high accuracy. In addition, adopting another structure in which the sliding movement is performed with three protrusions that contact with the sliding surface, stable sliding movement can be obtained.
Features, components and specific details of the structures of the above-described embodiments according to claim 1 may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A tilt adjusting mechanism that adjusts a tilt of at least one of a plurality of objective lenses (1,2) so that they have the same inclination state, the tilt adjusting mechanism comprising:
an aperture member (3) to which an objective lens to be a target of the tilt adjustment is fixed; and
a lens holder (4) to which the aperture member (3) is fixed from a slidable state for the tilt adjustments, wherein
as a surface for sliding movement of the aperture member (3) with respect to the lens holder (4), there is provided a sliding surface (3S) that is a part of a spherical surface **characterized in that**
the center of the spherical surface is a principal point of the objective lens or adjacent point thereof, and
the aperture member (3) forms an aperture stop for the objective lens to restrict the outgoing-side numerical aperture of the objective lens.

2. The tilt adjusting mechanism according to claim 1, **characterized in that** the aperture member (3) has the sliding surface (3S).

3. The tilt adjusting mechanism according to claim 1 or 2, **characterized in that** the lens holder (4) is provided with an optical path hole (4b) having a circular opening, and the sliding movement is performed at a brim (4E) of the optical path hole (4b).

4. The tilt adjusting mechanism according to any one of claims 1 to 3, **characterized in that** the lens holder (4) is provided with an optical path hole (4b) having a circular opening, and a brim (4E) of the optical path hole (4b) has the sliding surface (4S).

5. The tilt adjusting mechanism according to any one of claims 1 to 4, **characterized in that** the sliding movement is performed at three protrusions (3P;4P) that contact with the sliding surface (3S;4S).

6. An actuator for driving an objective lens, comprising a tilt adjusting mechanism according to any one of claims 1 to 5 and a driving source for moving the objective lens.

7. An optical pickup device equipped with an actuator according to claim 6.

8. The optical pickup device according to claim 7, **characterized in that** the objective lens is made up of first and second objective lenses (1,2), and the tilt adjusting mechanism adjusts a tilt of the second objective lens (2) so that both the first and the second objective lenses (1,2) have the same inclination state.

9. The optical pickup device according to claim 8, **characterized in that** the lens holder (4) has cylindrical optical path hole (4b), and the sliding movement is performed at a brim (4E) of the optical path hole (4b).

## Patentansprüche

1. Neigungseinstellmechanismus, der eine Neigung wenigstens einer von mehreren Objektivlinsen (1, 2) einstellt, so dass sie den gleichen Neigungszustand haben, wobei der Neigungseinstellmechanismus umfasst:
ein Öffnungsblendenelement (3), an dem eine Objektivlinse, die das Ziel der Neigungseinstellung bildet, befestigt ist; und
einen Linsenhalter (4), an dem das Öffnungsblendenelement (3) aus einem gleitfähigen Zustand für die Neigungseinstellung heraus befestigt ist, wobei
als eine Oberfläche für die Gleitbewegung des Öffnungsblendenelements (3) in Bezug auf den Linsenhalter (4) eine Gleitoberfläche (3S) vorgesehen ist, die einen Teil einer Kugeloberfläche bildet,
**dadurch gekennzeichnet, dass**
das Zentrum der Kugeloberfläche ein Hauptpunkt der Objektivlinse oder ein hierzu benachbarter Punkt ist und
das Öffnungsblendenelement (3) eine Öffnungsblende für die Objektivlinse bildet, um die ausgangsseitige numerische Apertur der Objektivlinse zu beschränken.

2. Neigungseinstellmechanismus nach Anspruch 1, **dadurch gekennzeichnet, dass** das Öffnungsblendenelement (3) die Gleitoberfläche (3S) aufweist.

3. Neigungseinstellmechanismus nach Anspruch 1 oder 2, **dadurch gekennzeichnet, dass** der Linsenhalter (4) mit einem Lichtwegloch (4b) mit einer kreisförmigen Öffnung versehen ist, wobei die Gleitbewegung an einem Rand (4E) des Lichtweglochs (4b) erfolgt.

4. Neigungseinstellmechanismus nach einem der Ansprüche 1 bis 3, **dadurch gekennzeichnet, dass** der Linsenhalter (4) mit einem Lichtwegloch (4b) mit einer kreisförmigen Öffnung versehen ist und ein Rand (4E) des Lichtweglochs (4b) die Gleitoberfläche (4S) aufweist.

5. Neigungseinstellmechanismus nach einem der Ansprüche 1 bis 4, **dadurch gekennzeichnet, dass** die Gleitbewegung an drei Vorsprüngen (3P; 4P), die mit der Gleitoberfläche (3S; 4S) in Kontakt sind, erfolgt.

6. Aktor zum Antreiben einer Objektivlinse, der einen Neigungseinstellmechanismus nach einem der Ansprüche 1 bis 5 und eine Antriebsquelle zum Bewegen der Objektivlinse umfasst.

7. Optische Aufnehmervorrichtung, die mit einem Aktor nach Anspruch 6 ausgerüstet ist.

8. Optische Aufnehmervorrichtung nach Anspruch 7, **dadurch gekennzeichnet, dass** die Objektivlinse aus einer ersten und einer zweiten Objektivlinse (1, 2) gebildet ist und der Neigungseinstellmechanismus eine Neigung der zweiten Objektivlinse (2) so einstellt, dass die erste und die zweite Objektivlinse (1, 2) den gleichen Neigungszustand haben.

9. Optische Aufnehmervorrichtung nach Anspruch 8, **dadurch gekennzeichnet, dass** der Linsenhalter (4) ein zylindrisches Lichtwegloch (4b) besitzt und die Gleitbewegung an einem Rand (4E) des Lichtweglochs (4b) erfolgt.

## Revendications

1. Mécanisme de réglage d'inclinaison qui règle une inclinaison d'au moins une lentille d'objectif parmi une pluralité de lentilles d'objectif (1, 2) de sorte qu'elles se trouvent dans le même état d'inclinaison, le mécanisme de réglage d'inclinaison comprenant :
un élément d'ouverture (3) auquel est fixée une lentille d'objectif qui doit faire l'objet du réglage de l'inclinaison ; et
un porte-lentille (4) auquel l'élément d'ouverture (3) est fixé à partir d'un état coulissant pour le réglage de l'inclinaison, dans lequel
il est prévu comme surface pour le mouvement coulissant de l'élément d'ouverture (3) par rapport au porte-lentille (4), une surface de coulissement (3S) qui fait partie d'une surface sphérique,
**caractérisé en ce que**
le centre de la surface sphérique est un point principal de la lentille d'objectif ou un point adjacent de celle-ci, et
l'élément d'ouverture (3) forme un diaphragme d'ouverture pour la lentille d'objectif afin de limiter l'ouverture numérique du côté sortie de la lentille d'objectif.

2. Le mécanisme de réglage d'inclinaison selon la revendication 1, **caractérisé en ce que** l'élément d'ouverture (3) possède la surface de coulissement (3S).

3. Le mécanisme de réglage d'inclinaison selon la revendication 1 ou 2, **caractérisé en ce que** le porte-lentille (4) est muni d'un orifice de trajectoire optique (4b) possédant une ouverture circulaire et le mouvement coulissant est effectué sur un bord (4E) de l'orifice de la trajectoire optique (4b).

4. Le mécanisme de réglage d'inclinaison selon l'une quelconque des revendications 1 à 3, **caractérisé en ce que** le porte-lentille (4) est muni d'un orifice de trajectoire optique (4b) possédant une ouverture circulaire et un bord (4E) de l'orifice de la trajectoire optique (4b) possède la surface de coulissement (4S).

5. Le mécanisme de réglage d'inclinaison selon l'une quelconque des revendications 1 à 4, **caractérisé en ce que** le mouvement coulissant est effectué au niveau de trois saillies (3P ; 4P) qui entrent en contact avec la surface de coulissement (3S; 4S).

6. Actionneur permettant d'entraîner une lentille d'objectif, comprenant un mécanisme de réglage d'inclinaison selon l'une quelconque des revendications 1 à 5 et une source d'entraînement permettant de déplacer la lentille d'objectif.

7. Dispositif de lecture optique équipé d'un actionneur selon la revendication 6.

8. Le dispositif de lecture optique selon la revendication 7, **caractérisé en ce que** la lentille d'objectif est constituée d'une première et d'une seconde lentilles d'objectif (1, 2) et le mécanisme de réglage d'inclinaison règle une inclinaison de la seconde lentille d'objectif (2) de sorte que la première et la seconde lentilles d'objectifs (1, 2) se trouvent dans le même état d'inclinaison.

9. Le dispositif de lecture optique selon la revendication 8, **caractérisé en ce que** le porte-lentille (4) possède un orifice de trajectoire optique cylindrique (4b) et le mouvement coulissant est effectué sur un bord (E) de l'orifice de la trajectoire optique (4b).
